# EUROPÄISCHE PATENTSCHRIFT

(11) **EP 4 146 964 B1**
(45) Veröffentlichungstag und Bekanntmachung des Hinweises auf die Patenterteilung: **02.10.2024**
(21) Anmeldenummer: 20728413.4
(22) Anmeldetag: 08.05.2020
(51) Int. Cl.: B60K 15/035, F16K 1/44, F16K 1/52, F16K 31/06, F16K 24/00, B60K 15/03, F16K 17/196

(54) **KRAFTSTOFFDAMPFSCHALT- UND -LÜFTUNGSVENTIL FÜR EINE VERBRENNUNGSKRAFTMASCHINE**
FUEL VAPOUR SWITCH VALVE AND VENTILATION VALVE FOR AN INTERNAL COMBUSTION ENGINE
SOUPAPE DE COMMUTATION DE VAPEUR DE CARBURANT ET SOUPAPE DE VENTILATION POUR UN MOTEUR À COMBUSTION INTERNE

(43) Veröffentlichungstag der Anmeldung: 15.03.2023
(73) Patentinhaber: Pierburg GmbH, 41460 Neuss (DE)
(72) Erfinder: WAGNER, Juri, 41460 Neuss (DE); MONDORF, Christoph, 41460 Neuss (DE)
(74) Vertreter: terpatent PartGmbB
(86) Internationale Anmeldenummer: PCT/EP2020/062935
(87) Internationale Veröffentlichungsnummer: WO 2021/223891

(56) Entgegenhaltungen:
- DE-A1- 102010 044 336
- US-A- 3 414 232
- US-A1- 2016 123 490
- US-A1- 2018 119 650
- US-B2- 6 651 953

## Beschreibung

Die Erfindung betrifft ein Kraftstoffdampfschalt- und -lüftungsventil für eine Verbrennungskraftmaschine mit einem Aktor, einem ersten Anschluss und einem zweiten Anschluss, einem Ventilkörper, der mit einem axial bewegbaren Betätigungsglied des Aktors gekoppelt ist und eine erste Auflagefläche aufweist, mit der der Ventilkörper auf einen ersten Ventilsitz absenkbar und vom ersten Ventilsitz abhebbar ist, der zwischen dem ersten Anschluss und dem zweiten Anschluss angeordnet ist, und eine zweite Auflagefläche aufweist, mit der der Ventilkörper gegen einen zweiten Ventilsitz bewegbar ist, der axial verschiebbar ist und über eine Feder in Richtung zum Ventilkörper belastet ist.

Kraftstoffdampfschalt- und -lüftungsventile dienen als Abschalt- und Entlastungsventile und werden fluidtechnisch zwischen dem Kraftstofftank eines Fahrzeugs und einem Aktivkohlefilter, der zur Absorption von Kraftstoffdämpfen dient, angeordnet, durch die Druckschwankungen im Kraftstofftank ausgeglichen werden sollen. Bei einem entstehenden Überdruck oder Unterdruck im Tank soll der Druck durch eine mechanische Bypassfunktion im Fall des Überdrucks durch Entlüftung zum Aktivkohlefilter abgebaut und im Fall des Unterdrucks durch Belüftung der Unterdruck im Tank begrenzt beziehungsweise ausgeglichen werden.

Zusätzlich muss es aus Sicherheitsgründen ermöglicht werden, das Ventil aktiv zu betätigen, um bei Fehlern im Bereich der Tankdruckregelung, den Pfad zwischen Kraftstofftank und Aktivkohlebehälter öffnen zu können, um ein Implodieren oder Explodieren zu vermeiden.

So muss das Kraftstoffdampfschalt- und -lüftungsventil beispielsweise unmittelbar vor und während des Tankvorgangs geöffnet werden, um einerseits sicherzustellen, dass beim Öffnen des Tankdeckels keine Kraftstoffdämpfe durch Überdruck zum Nutzer gelangen und anderseits kein erhöhter Druckaufbau während des Tankens im Tank erfolgt.

Es sind verschiedene Ventile bekannt geworden, die eine oder mehrere dieser Funktionen vereinen. So wird in der DE 10 2010 044 336 A1 eine Ventilanordnung beschrieben, bei der ein Schaltventil mittels eines Elektromagneten betätigt werden kann, um eine Verbindung zwischen dem Tank und dem Aktivkohlefilter herzustellen. Der Ventilkörper dieses Ventils weist eine zweite Auflagefläche auf, mit der der Ventilkörper gegen den Regelkörper eines Überdruckventils anliegt, welches federbelastet gegen den Ventilkörper anliegt und so einen zentralen Durchlass im Ventilkörper verschließt, solange kein Überdruck im Tank herrscht. Des Weiteren kann bei einem Unterdruck im Tank der Ventilkörper gegen ein zweites Federelement vom Ventilsitz wegbewegt werden, so dass eine Belüftung des Tanks erfolgt. Entsprechend kann mit nur einem Ventil eine aktive Zu- und Abschaltung einer fluidischen Verbindung zwischen dem Tank und dem Aktivkohlefilter hergestellt werden und zusätzlich bei definierten Schaltpunkten eine Be- oder Entlüftung bei zu hohen Über- oder Unterdrücken hergestellt werden. Neben einer fehlenden möglichen Reduzierung des Gesamtdurchflusses, entstehen jedoch bei diesem Ventil noch zu große Druckverluste. Des Weiteren ist der benötigte Bauraum relativ groß.

Des Weiteren ist aus der US 6 651 953 B2 ein Tankventil bekannt, bei dem ein erster Ventilkörper fest an einer Ventilstange befestigt ist, welche über einen Elektromagneten betätigt wird und ein zweiter Ventilkörper beweglich auf der Ventilstange angeordnet ist. An diesem zweiten Ventilkörper sind zwei Auflageflächen ausgebildet, wobei die erste Auflagefläche gegen das Gehäuse zum Verschließen des Durchströmungsquerschnitts verschiebbar ist und der erste Ventilkörper gegen die zweite Auflagefläche verschiebbar ist. Ein Druckausgleich in beide Richtungen oder eine druckabhängige Durchflussbegrenzung wird mit diesem Ventil nicht erreicht.

Es stellt sich daher die Aufgabe, ein Kraftstoffdampfschalt- und -lüftungsventil bereit zu stellen, welches einen geringeren Druckverlust verursacht und kleiner gebaut werden kann. Ein solches Ventil soll möglichst kostengünstig hergestellt werden können.

Diese Aufgabe wird durch ein Kraftstoffdampfschalt- und -lüftungsventil für eine Verbrennungskraftmaschine mit den Merkmalen des Hauptanspruchs 1 gelöst.

Das erfindungsgemäße Kraftstoffdampfschalt- und -lüftungsventil weist einen Aktor auf, welcher üblicherweise als Elektromagnet ausgebildet ist, aber auch beispielsweise als pneumatischer Aktor ausgeführt sein könnte. Das Ventil weist einen ersten Anschluss und einen zweiten Anschluss auf, die als Einlass und Auslass dienen, wobei dies je nach Strömungsrichtung wechseln kann, da zur Belüftung Luft in den Kraftstofftank geleitet wird, während der Kraftstoffdampf in umgekehrter Richtung zum Aktivkohlefilter strömt. Zwischen den Anschlüssen befindet sich ein Ventilkörper, der mit einem axial bewegbaren Betätigungsglied des Aktors gekoppelt ist. Dieses Betätigungsglied ist im Falle des elektromagnetischen Aktors der Anker. Der Ventilkörper weist eine erste Auflagefläche auf, mit der der Ventilkörper auf einen ersten Ventilsitz absenkbar und vom ersten Ventilsitz abhebbar ist, und der zwischen dem ersten Anschluss und dem zweiten Anschluss angeordnet ist und üblicherweise direkt am Strömungsgehäuse ausgeführt oder befestigt ist. Des Weiteren weist der Ventilkörper eine zweite Auflagefläche auf, mit der der Ventilkörper gegen einen zweiten Ventilsitz bewegbar ist, der axial verschiebbar ist und über eine Feder in Richtung zum Ventilkörper belastet ist. Sobald der Ventilkörper von einem der Ventilsitze abgehoben ist, erfolgt eine Strömung von einem Anschluss zum anderen Anschluss. Zusätzlich werden die beiden Auflageflächen des Ventilkörpers nun so zueinander angeordnet, dass die zweite Auflagefläche radial innerhalb der ersten Auflagefläche angeordnet ist und axial näher zum Aktor angeordnet ist als die erste Auflagefläche. So können die Auflageflächen an einem Bauteil ausgebildet werden und der axiale Bauraum verringert werden, da der zweite Ventilsitz in den Ventilkörper eintauchen kann. Dies ermöglicht auch eine Verringerung des Druckverlustes, da das den zweiten Ventilsitz aufweisende Bauteil des bei geöffnetem ersten Ventilsitz zumindest größtenteils außerhalb des durchströmten Bereiches angeordnet ist.

Vorzugsweise weist der Ventilkörper ein Trägerelement auf, an dem ein Dichtelement befestigt ist, an dem die erste Auflagefläche und die zweite Auflagefläche ausgebildet sind. Ein solcher montierbarer Ventilkörper ist besonders kostengünstig herzustellen und kann so aufgebaut werden, dass einerseits eine hohe Stabilität des Ventilkörpers vorliegt und andererseits im Bereich der Auflageflächen eine ausreichende Flexibilität für eine hohe Dichtigkeit vorliegt.

In einer hierzu weiterführenden Ausführungsform ist das Dichtelement aus einem Elastomer, und das Trägerelement ist aus einem Duroplast, einem Thermoplast oder einem Metall und weist entsprechend eine hohe Steifigkeit auf, während das Dichtelement verformbar ist. So wird eine hohe Festigkeit bei guter Dichtwirkung erreicht.

Eine besonders einfache und kostengünstig durchführbare Befestigung wird erreicht, indem das Dichtelement durch Umformen eines radial äußeren Kragens des Trägerelementes am Trägerelement befestigt ist. Dies bedeutet, dass ein sich axial erstreckender Vorsprung des Trägerelementes das Dichtelement umgibt und unterhalb eines Absatzes des Dichtelementes umgeformt und über den Absatz des Dichtelementes gebogen wird, wodurch dieses axial im Trägerelement fixiert ist.

Vorzugsweise sind die beiden Auflageflächen des Dichtelementes als Dichtlippen ausgebildet, die sich vom Dichtelement zumindest axial in Richtung des jeweiligen Ventilsitzes erstrecken. Solche dünnen Dichtlippen weisen eine noch größere Flexibilität auf, wodurch die Dichtwirkung zusätzlich verbessert wird.

Des Weiteren ist es vorteilhaft, wenn die Dichtlippen eine Erstreckungskomponente in axialer Richtung und eine Erstreckungskomponente nach radial innen aufweisen, denn hierdurch kann eine noch bessere Dichtwirkung durch eine in Axialrichtung größere Flexibilität erzielt werden. Zusätzlich wird der Druckverlust bei einer Strömung vom Kraftstofftank zum Aktivkohlefilter zwischen dem ersten Ventilsitz und der ersten Auflagefläche verringert, da sich diese Dichtlippe etwa in Strömungsrichtung erstreckt und somit einen geringen Widerstand bietet.

In einer bevorzugten Ausführungsform ist der zweite Ventilsitz an einer sich senkrecht zur Mittelachse erstreckenden Ventilsitzplatte eines Ventilsitzkörpers ausgebildet. So wird eine gerade Fläche zur Auflage auf der zweiten Auflagefläche und somit zum Verschluss des inneren Durchströmungsquerschnitts der zweiten Auflagefläche zur Verfügung gestellt. Des Weiteren weist diese Platte eine entsprechend geringe axiale Ausdehnung auf, so dass die axiale Bauhöhe des Ventils gering ist.

Insbesondere ist es in einer weiterführenden Ausbildung der Erfindung vorteilhaft, wenn die Ventilsitzplatte in ihrem den Ventilsitz bildenden Bereich eine geringere axiale Ausdehnung aufweist als der axiale Abstand der beiden Auflageflächen des Dichtelementes zueinander. Somit befindet sich die den Ventilsitz ausbildende Ventilsitzplatte vollständig im Windschatten der ersten Auflagefläche und bietet somit nur einen geringen Strömungswiderstand, so dass der auftretende Druckverlust bei Abheben des Ventilkörpers vom ersten Ventilsitz und gleichzeitiger Auflage des Ventilkörpers auf dem zweiten Ventilsitz minimiert wird. Hierdurch werden kleinere Durchströmungsflächen für gleiche Volumenströme benötigt, so dass der Bauraum reduziert werden kann.

Die Ventilsitzplatte ist vorzugsweise über einen Befestigungsstift an einem Regelkörper befestigt, der ein zentrales Sackloch aufweist, in welches sich der Befestigungsstift des Ventilsitzkörpers zur Befestigung des Regelkörpers am Ventilsitzkörper erstreckt. So kann der Ventilsitz und ein nachfolgender Regelkörper zu Regelung eines freien Durchströmungsquerschnitts als ein Bauteil ausgeführt werden, so dass eine hohe Integration entsteht, da mehrere Funktionen an einem Bauteil vereint werden.

Auch ist es vorteilhaft, wenn der Ventilsitzkörper in einem Übergangsbereich zwischen der Ventilsitzplatte und dem Befestigungsstift konkav geformt ist. Bei Auftreten einer Strömung zwischen der ersten Auflagefläche und dem ersten Ventilsitz wird diese lediglich allmählich umgelenkt, wodurch erneut ein verringerter Druckverlust erreicht wird.

Am Ventilkörper ist vorzugsweise eine Durchlassöffnung ausgebildet, die radial innerhalb der zweiten Auflagefläche mündet. Durch diese Durchlassöffnung kann der Druck aus dem Tank zur Öffnung des zweiten Ventilsitzes im Fall eines erhöhten Tankinnendruckes direkt auf die Ventilplatte wirken.

Des Weiteren ist es vorteilhaft, wenn der Ventilkörper über das Trägerelement kardanisch an einer Ventilstange befestigt ist, die mit dem Betätigungsglied verbunden ist. Durch diese Form der Aufhängung kann der Ventilkörper geringfügig zum Anker gekippt werden, wodurch eine umfängliche und damit dichte Auflage des Ventilkörpers auf dem ersten Ventilsitz auch bei Montageungenauigkeiten oder geringen Ablagerungen gewährleistet wird.

Vorzugsweise dient der Regelkörper als Durchflussbegrenzungselement, welches in eine Düse bewegbar ist, die in einem Strömungsgehäuseteil des zweiten Anschlusses angeordnet ist, wobei die Feder das Durchflussbegrenzungselement in einer aus der Düse heraus weisenden Richtung belastet. Durch diese Ausführung wird zusätzlich eine Begrenzung des Massenstroms vom Tank zum Aktivkohlefilter erreicht, wodurch eine Überlastung des Aktivkohlefilters zuverlässig vermieden wird.

Es wird somit ein Kraftstoffdampfschalt- und -lüftungsventil geschaffen, mit dem aktiv eine Verbindung zwischen einem Aktivkohlefilter und einem Tank hergestellt oder geschlossen werden kann, wobei bei bestimmten Betriebspunkten, nämlich einem zu hohen Überdruck gegenüber Atmosphäre im Tank oder einem zu hohen Unterdruck gegenüber Atmosphäre im Tank eine Verbindung durch die vorhandenen Druckunterschiede hergestellt wird. Zusätzlich wird ein zu schnelles Abströmen von Kraftstoffdampf aus dem Tank und zum Aktivkohlefilter durch das erfindungsgemäße Durchflussregelelement verhindert, welches den Durchfluss für alle Drücke auf einen Maximaldurchfluss begrenzt, welcher einer vom Aktivkohlefilter zu absorbierenden beziehungsweise zu speichernden Kraftstoffdampfdurchfluss entspricht. Dies Funktionen werden in einem Ventil vereinigt, welches sehr wenig Bauraum benötigt und durch welches die Druckverluste im System deutlich reduziert werden, wodurch wiederum kleinere Durchströmungsflächen zur Verfügung gestellt werden müssen, was erneut dazu führt, dass der Bauraum und die Betätigungskräfte verringert werden können.

Ein Ausführungsbeispiel eines erfindungsgemäßen Kraftstoffdampfschalt- und -lüftungsventils für eine Verbrennungskraftmaschine, insbesondere zur Verwendung bei einem Hybridantrieb, ist in den Figuren dargestellt und wird nachfolgend beschrieben.
Figur 1 zeigt eine Seitenansicht eines erfindungsgemäßen Kraftstoffdampfschalt- und -lüftungsventils mit schematisch dargestellten angeschlossenen Komponenten.
Figur 2 zeigt eine Seitenansicht des erfindungsgemäßen Kraftstoffdampfschalt- und -lüftungsventils aus Figur 1 in geschnittener Darstellung.

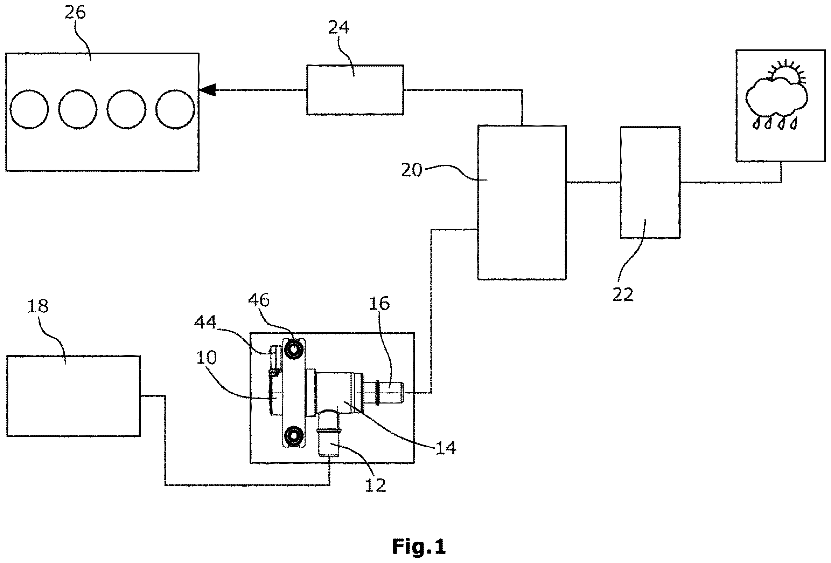

Wie in Figur 1 dargestellt ist, weist das erfindungsgemäße Kraftstoffdampfschalt- und -lüftungsventil 10 einen ersten Anschluss 12 auf, der seitlich aus einem Gehäuse 14 des Kraftstoffdampfschalt- und -lüftungsventils 10 ragt und einen zweiten axialen Anschluss 16 auf. Der erste, seitliche Anschluss 12 ist mit einem Kraftstofftank 18 verbunden, während der zweite axiale Anschluss 16 mit einem Aktivkohlefilter 20 verbunden ist. Vom Aktivkohlefilter 20 führt eine Leitung über ein Kraftstoffdampfauslassventil 22 zur Atmosphäre oder über eine zweite Leitung, in der ein Spülventil 24 angeordnet ist zu einer Verbrennungskraftmaschine 26, wo die Kraftstoffdämpfe der Verbrennung zugeführt werden können.

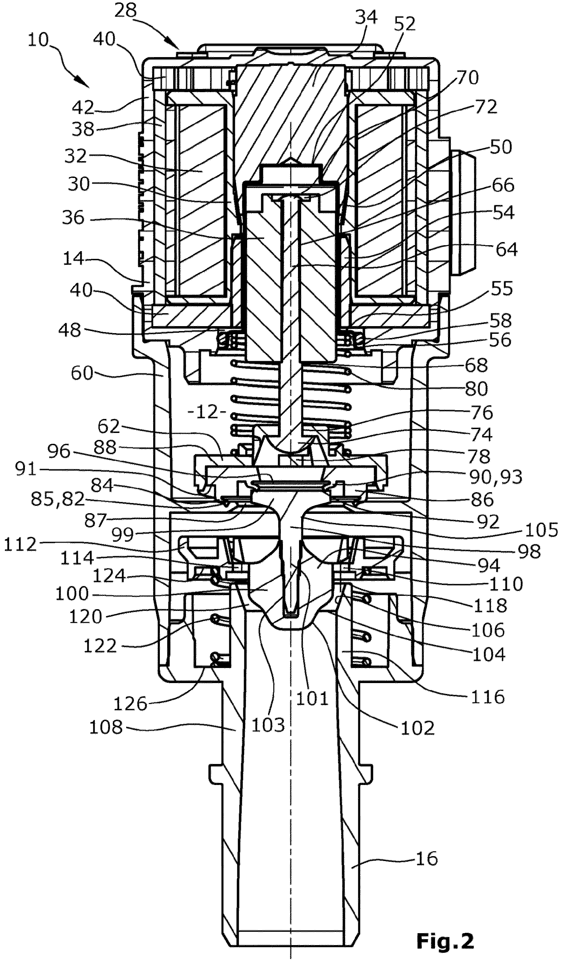

Der Aufbau des Kraftstoffdampfschalt- und -lüftungsventils 10 ist in Figur 2 zu erkennen. Es besteht aus einem Aktor 28, der als Elektromagnet ausgeführt ist und eine auf einen Spulenträger 30 gewickelte Spule 32, einen innenliegenden Kern 34, einen axial verschiebbaren Anker, der als Betätigungsglied 36 dient, sowie ein die Spule 32 radial umgebendes Joch 38 und jeweils ein an den axialen Enden des Spulenträgers 30 angeordnetes Rückschlussblech 40 aufweist, welche einen elektromagnetischen Kreis bilden. Dieser Aktor 28 und insbesondere das Joch 38 ist zur Bildung eines Aktorgehäuseteils 42 des Gehäuses 14 mit einem Kunststoff umspritzt, welches auch einen Stecker 44 und Befestigungsaugen 46 ausbildet und am zum Kern entgegengesetzten Ende eine axiale Öffnung 48 aufweist, in die eine Gleitbuchse 50 eingeschoben ist, welche das Betätigungsglied 36 führt. Diese Gleitbuchse 50 ist aus einem nicht magnetisierbaren Material und topfförmig ausgebildet, wobei der Boden 52 gegen den Kern 34 anliegt. Der Hauptführungsbereich der Gleitbuchse 50 ist von einer weichmagnetischen Buchse 54 umgeben, welche in das Rückschlussblech 40 und den Spulenträger 30 eingepresst ist. Die Gleitbuchse 50 weist eine radiale Erweiterung 55 auf, von der aus sich an ihrem offenen Ende ein erweiterter Bereich 56 erstreckt, der gegenüberliegend zu den die Öffnung 48 begrenzenden Wandflächen des Aktorgehäuseteils 42 angeordnet ist, wobei zwischen dem erweiterten Bereich 56 der Gleitbuchse 50 und der die Öffnung 48 begrenzende Wandfläche ein Dichtring 58 angeordnet ist, durch den ein Eindringen von Kraftstoffdampf in Richtung der Spule 32 verhindert wird.

Am Aktorgehäuseteil 42 ist ein erstes Strömungsgehäuseteil 60 befestigt, welches den ersten Anschluss 12 ausbildet und in dem ein Ventilkörper 62 bewegbar ist, welcher mit dem als Betätigungsglied 36 dienenden Anker gekoppelt ist, indem am Anker eine Ventilstange 64 befestigt ist, an der der Ventilkörper 62 kardanisch befestigt ist. Die Befestigung der Ventilstange 64 am Betätigungsglied 36 erfolgt, indem die Ventilstange 64 durch eine Durchgangsbohrung 66 im Betätigungsglied 36 geschoben wird bis die Ventilstange 64 mit einer Erweiterung 68 axial gegen das zum Ventilkörper 62 weisende Ende des Betätigungsgliedes 36 anliegt.

In diesem Zustand ragt die Ventilstange 64 am entgegengesetzten Ende aus dem Betätigungsglied 36 heraus und kann dort umgeformt werden, so dass eine Art Nietkopf 70 in einer kreisringförmigen Ausnehmung 72 an der zum Kern 34 weisenden Seite des Ankers anliegt. An der entgegengesetzten Seite weist die Ventilstange 64 ebenfalls eine Art Nietkopf 74 auf, der in den Ventilkörper 62 ragt, so dass der Ventilkörper 62 ankerseitig gegen das flache Ende des Nietkopfes 74 anliegt, wozu am Ventilkörper 62 eine Öffnung 76 ausgebildet ist, deren Durchmesser im Wesentlichen dem Durchmesser der Ventilstange 64 entspricht. Die runde Seite des Nietkopfes 74 ist gegenüberliegend zu einem radial in das Innere des Ventilkörpers 62 ragenden Vorsprung 78 angeordnet, so dass der Ventilkörper 62 lediglich geringfügig axial relativ zur Ventilstange 64 beweglich ist.

Ein Federelement 80 spannt den Ventilkörper 62 einerseits gegen die flache Seite des Nietkopfes 74 vor und drückt andererseits den Ventilkörper 62 mit dem Anker 36 gegen einen ersten Ventilsitz 82, der am ersten Strömungsgehäuseteil 60 ausgebildet ist, indem das Federelement 80 zwischen den Ventilkörper 62 und die Erweiterung 55 der Gleitbuchse 50 eingespannt wird.

Im geschlossenen Zustand liegt der Ventilkörper 62 mit einer ersten, radial äußeren Auflagefläche 84, die als Dichtlippe 85 eines Dichtelementes 86 ausgebildet ist, gegen den ersten Ventilsitz 82 an, der eine Durchströmungsöffnung 87 umgibt. Das Dichtelement 86 besteht aus einem elastischen Material, insbesondere einem Elastomer und ist an einem steifen Trägerelement 88 befestigt, über welches auch die Verbindung zur Ventilstange 64 besteht, so dass der Vorsprung 78 und die Öffnung 76 am Trägerelement 88 ausgebildet sind. Das Trägerelement 88, das aus einem Duroplast, einem Thermoplast oder aus Metall hergestellt ist, deckt das Dichtelement 86 in Richtung des Ankers 36 weitestgehend ab und umgibt dieses auch zumindest teilweise radial mit einem radial äußeren Kragen 89, der zur Befestigung des Dichtelementes 86 am axial äußeren Ende nach radial innen umgeformt wird, so dass das Ende des Kragens 89 axial gegen einen Absatz 91 am Dichtelement 86 anliegt.

Das Dichtelement 86 weist erfindungsgemäß zusätzlich zur ersten Auflagefläche 84 noch eine weitere radial innerhalb der ersten Auflagefläche 84 platzierte, zweite Auflagefläche 90 auf, die ebenfalls als Dichtlippe 93 ausgeführt ist und axial näher zum Anker 36 angeordnet ist als die erste Auflagefläche 84 und mit der das Dichtelement 86 auf einen zweiten Ventilsitz 92 absenkbar ist. Die Dichtlippen 85, 93 erstrecken sich axial und weisen eine Erstreckungskomponente nach radial innen auf, so dass ein Hinterschnitt entsteht. Entsprechend werden sie bei Auflage auf den Ventilsitzen 82, 92 nach radial innen weiter verformt, so dass einerseits die Elastizität aufgrund des Materials und anderseits aufgrund der Form mit dem Hinterschnitt genutzt werden kann, um einen dichten Verschluss zu erhalten und Unebenheiten oder mangelnde Koaxialitäten ausgleichen zu können.

Dieser zweite Ventilsitz 92 ist axial bewegbar und an einem Durchflussbegrenzungselement 94 ausgebildet, welches bei Auflage auf der zweiten Auflagefläche 90 eine radial innerhalb der zweiten Auflagefläche 90 ausgebildete Durchlassöffnung 96 am Dichtelement 86 und am Ventilkörper 62 verschließt.

Das Durchflussbegrenzungselement 94 ist zweiteilig ausgeführt und besteht aus einem Ventilsitzkörper 98, an dem der zweite Ventilsitz 92 ausgebildet ist, und einem Regelkörper 100. Der Ventilsitzkörper 98 weist eine Ventilsitzplatte 99 auf, die sich senkrecht zur Bewegungsachse beziehungsweise Mittelachse des Ventils 10 erstreckt und an deren zum Ventilkörper 62 weisenden Seite der zweite Ventilsitz 92 ausgebildet ist, und von der aus sich ein Befestigungsstift 101 erstreckt, der in einem Sackloch 103 des Regelkörpers 100 befestigt ist. Ein Übergangsbereich 105 zwischen der Ventilsitzplatte 99 und dem Befestigungsstift 101 ist konkav geformt. Des Weiteren weist die Ventilsitzplatte 99 zumindest im Bereich des Ventilsitzes 92 eine axiale Ausdehnung auf, die geringer ist als der axiale Versatz der beiden Auflageflächen 84, 90 am Ventilkörper 62. Dies hat zur Folge, dass die Ventilsitzplatte 99 vollständig axial zwischen den beiden Auflageflächen angeordnet ist, solange der Ventilkörper 62 nicht vom zweiten Ventilsitz 92 abgehoben wird.

Der Regelkörper 100 weist eine sphärisch geformte Umströmungsfläche 102 auf, welche mit einer Düse 104 korrespondiert, die an einer Innenfläche 106 eines zweiten Strömungsgehäuseteils 108 ausgebildet ist, welches am ersten Strömungsgehäuseteil 60 befestigt ist und den zweiten, axialen Anschluss 16 bildet.

Das Durchflussbegrenzungselement 94 weist Stege 110 auf, die sich vom Regelkörper 100 nach radial außen erstrecken und die Umströmungsfläche 102 mit einem radial äußeren Ring 112 verbinden. Entsprechend werden zwischen den Stegen 110 sowie zwischen der Umströmungsfläche 102 und dem Ring 112 mehrere Durchlassöffnungen 114 gebildet.

Das zweite Strömungsgehäuseteil 108 weist einen radial inneren, ringförmigen Vorsprung 116 auf, an dessen Innenseite die Düse 104 ausgebildet ist und dessen axiales Ende als Anschlag 118 für die Bewegung des Durchflussbegrenzungselementes 94 dient, welches bei Anliegen des Rings 112 am Anschlag 118 lediglich einen engen Spalt 120 zwischen der Umströmungsfläche 102 und der Düse 104 freigibt. Das Durchflussbegrenzungselement 94 wird mittels einer Feder 122, die zwischen einer Axialnut 124 des Ringes 112 und einer Auflagefläche 126 am zweiten Strömungsgehäuseteil 108 eingespannt ist, in Richtung des Ventilkörpers 62 und vom Anschlag 118 wegweisend belastet, so dass die Feder 122 den zweiten Ventilsitz 92 gegen den Ventilkörper 62 drückt und den Regelkörper 100 aus dem kleinsten Querschnitt der Düse 104 heraus belastet.

Die Funktion des Ventils ist nun so, dass im Normalzustand der Ventilkörper 62 mit seinen verformten Dichtlippen 85, 93 auf dem ersten Ventilsitz 82 und dem zweiten Ventilsitz 92 aufliegt und somit keine Durchströmung zwischen den Anschlüssen 12, 16 vorliegt.

Steigt nun beispielsweise aufgrund von Erwärmung der Druck im Kraftstofftank 18 und damit am ersten Anschluss 12 auf beispielsweise über 0,3 bar Überdruck gegenüber Atmosphäre wird der zweite Ventilsitz 92 durch den auf die Ventilsitzplatte 99 wirkenden Druck von der zweiten Auflagefläche 90 des Ventilkörpers 62 abgehoben, da bei diesem Druck die am Durchflussbegrenzungselement 94 aufgrund der Druckdifferenz wirkenden Kräfte größer sind als die Federkraft der Feder 122. Entsprechend strömt Kraftstoffdampf vom ersten Anschluss 12 über die Durchlassöffnung 96 am Ventilkörper 62 und die Durchströmungsöffnung 87 im Inneren des ersten Ventilsitzes 82 sowie durch die Durchlassöffnungen 114 zwischen den Stegen 110 und dem Spalt 120 zum zweiten Anschluss 16 und damit in Richtung des Aktivkohlefilters 20, so dass der Druck im Kraftstofftank 18 abgebaut wird. Bei sehr großen Drücken, die zu Volumenströmen führen würden, die nicht mehr vom Aktivkohlefilter 20 absorbiert werden können, tritt die Funktion des Durchflussbegrenzungselementes 94 in Kraft. Dieses wird bei sehr hohen Druckunterschieden bis gegen den Anschlag 118 verschoben. In dieser Position wird lediglich ein minimaler Spalt 120 zwischen dem Regelkörper 100 und der Düse 104 freigegeben, der einen maximalen Durchfluss zulässt, der dem maximal zulässigen Durchfluss des Aktivkohlefilters 20 von beispielsweise etwa 220 l/min entspricht. In den anderen Zuständen wird der Durchfluss durch den Spalt in Abhängigkeit der anliegenden Druckdifferenz geändert, also mit fallendem Druck ein größerer Durchströmungsquerschnitt zur Verfügung gestellt.

Fällt nun beispielweise aufgrund der Tankentleerung der Druck im Kraftstofftank 18 und damit am ersten Anschluss 12 auf beispielsweise unter -0,1 bar Unterdruck gegenüber Atmosphäre wird der Ventilkörper 62 vom ersten Ventilsitz 82 abgehoben, da bei diesem Druck die am Ventilkörper 62 aufgrund der Druckdifferenz wirkenden Kräfte größer sind als die Federkraft des Federelementes 80. Entsprechend strömt Luft vom zweiten Anschluss 16 durch den Spalt 120 zwischen dem Regelkörper 100 und der Düse 104 sowie durch die Durchströmungsöffnung 87 und radial zwischen dem Ventilkörper 62 und dem ersten Ventilsitz 82 zum ersten Anschluss 12, so dass ein Druckausgleich im Tank erfolgt. Der dabei auftretende Strömungswiderstand ist sehr gering, da die Strömung entlang des konkaven Übergangsbereiches 105 allmählich umgelenkt wird und auch die Dichtlippe 85 eine Erstreckung aufweist, die im Wesentlichen der entstehenden Strömungsrichtung entspricht. Die Ventilsitzplatte 99 liegt in diesem Zustand weiter an der zweiten Auflagefläche 90 des Ventilkörpers 62 an, wird also durch die Feder 122 mit in Richtung des Elektromagneten 28 bewegt. Entsprechend befindet sich die Ventilsitzplatte 99 vollständig außerhalb des durchströmten Querschnitts, so dass auch durch die Ventilsitzplatte 99 kein Druckverlust entsteht.

Des Weiteren ist es durch Bestromung des Elektromagneten 28 möglich, das Kraftstoffdampfschalt- und -lüftungsventil 10 aktiv zu betätigen. Dies erfolgt beispielsweise vor dem Einleiten des Tankvorgangs, um sicherzugehen, dass zu diesem Zeitpunkt keine Über- oder Unterdrücke im Tank 18 vorhanden sind. Dabei wird durch Abheben ein gleicher Zustand des Ventils 10 hergestellt, wie im Fall eines hohen Unterdrucks im Tank 18. Eine Strömung von Luft vom zweiten Anschluss 16 zum ersten Anschluss 12 ist ebenso möglich, wie eine Strömung von Kraftstoffdampf in umgekehrter Richtung, wobei hierbei die Funktion des Durchflussbegrenzungselementes 94 erhalten bleibt. Der Strömungswiderstand bleibt jedoch gering, da die Ventilsitzplatte 99 weiterhin außerhalb des Durchströmungsquerschnitts angeordnet ist.

Es wird entsprechend ein Kraftstoffdampfschalt- und -lüftungsventil 10 geschaffen, welches zuverlässig sowohl Unter- als auch Überdrücke im Tank 18 abbauen kann und zusätzlich den Durchfluss des Kraftstoffdampfes auf einen maximal zulässigen Wert begrenzt. Auch eine aktive Schaltung ist möglich. Alle diese Funktionen werden in einem kleinbauenden Ventil mit einer minimalen Teileanzahl verwirklicht, da mehrere Funktionen an einem Bauteil verwirklicht werden und durch die geringen Strömungswiderstände und den geringen Druckverlust die vorhandenen Querschnitte relativ klein gehalten werden können, um die notwendigen Volumenströme zu verwirklichen. Zusätzlich entfällt dadurch Gewicht an den zu bewegenden Bauteilen, so dass auch der Aktor kleiner ausgeführt werden kann.

Es sollte deutlich sein, dass verschiedene Änderungen im Vergleich zum Ausführungsbeispiel möglich sind, ohne den Schutzbereich des Hauptanspruchs zu verlassen. Neben einer unterschiedlichen Ausführung der Gehäusetrennungen kann auch das Durchflussbegrenzungselement oder der Aktor anders ausgeführt werden. Die Schaltpunkte können mit den vorhandenen Federn je nach Anwendung individuell angepasst werden. Gleiches gilt für den maximal zulässigen Durchfluss, der durch konstruktive Änderung der Düse und/oder des Durchflussbegrenzungselementes oder der Ventilglieder und Durchströmungsquerschnitte im Ventil angepasst werden kann.

## Patentansprüche

1. Kraftstoffdampfschalt- und -lüftungsventil (10) für eine Verbrennungskraftmaschine (26) mit
einem Aktor (28),
einem ersten Anschluss (12) und einem zweiten Anschluss (16),
einem Ventilkörper (62), der mit einem axial bewegbaren Betätigungsglied (36) des Aktors (28) gekoppelt ist und eine erste Auflagefläche (84) aufweist, mit der der Ventilkörper (62) auf einen ersten Ventilsitz (82) absenkbar und vom ersten Ventilsitz (82) abhebbar ist, der zwischen dem ersten Anschluss (12) und dem zweiten Anschluss (16) angeordnet ist, und eine zweite Auflagefläche (90) aufweist, mit der der Ventilkörper (62) gegen einen zweiten Ventilsitz (92) bewegbar ist, der axial verschiebbar ist und über eine Feder (122) in Richtung zum Ventilkörper (62) belastet ist,
**dadurch gekennzeichnet, dass**
die zweite Auflagefläche (90) radial innerhalb der ersten Auflagefläche (84) angeordnet ist und axial näher zum Aktor (28) angeordnet ist als die erste Auflagefläche (84).

2. Kraftstoffdampfschalt- und -lüftungsventil (10) für eine Verbrennungskraftmaschine nach Anspruch 1,
**dadurch gekennzeichnet, dass**
der Ventilkörper (62) ein Trägerelement (88) aufweist, an dem ein Dichtelement (86) befestigt ist, an dem die erste Auflagefläche (84) und die zweite Auflagefläche (90) ausgebildet sind.

3. Kraftstoffdampfschalt- und -lüftungsventil (10) für eine Verbrennungskraftmaschine nach Anspruch 2,
**dadurch gekennzeichnet, dass**
das Dichtelement (86) aus einem Elastomer ist, und das Trägerelement (88) aus einem Duroplast, einem Thermoplast oder einem Metall ist.

4. Kraftstoffdampfschalt- und -lüftungsventil (10) für eine Verbrennungskraftmaschine nach Anspruch 3,
**dadurch gekennzeichnet, dass**
das Dichtelement (86) durch Umformen eines radial äußeren Kragens (89) des Trägerelementes (88) am Trägerelement (88) befestigt ist.

5. Kraftstoffdampfschalt- und -lüftungsventil (10) für eine Verbrennungskraftmaschine nach einem der Ansprüche 2 bis 4,
**dadurch gekennzeichnet, dass**
die beiden Auflageflächen (84, 90) des Dichtelementes (86) als Dichtlippen (85, 93) ausgebildet sind, die sich vom Dichtelement (86) zumindest axial in Richtung des jeweiligen Ventilsitzes (82, 92) erstrecken.

6. Kraftstoffdampfschalt- und -lüftungsventil (10) für eine Verbrennungskraftmaschine nach Anspruch 5,
**dadurch gekennzeichnet, dass**
die Dichtlippen (85, 93) eine Erstreckungskomponente in axialer Richtung und eine Erstreckungskomponente nach radial innen aufweisen.

7. Kraftstoffdampfschalt- und -lüftungsventil (10) für eine Verbrennungskraftmaschine nach einem der vorhergehenden Ansprüche,
**dadurch gekennzeichnet, dass**
der zweite Ventilsitz (92) an einer sich senkrecht zur Mittelachse erstreckenden Ventilsitzplatte (99) eines Ventilsitzkörpers (98) ausgebildet ist.

8. Kraftstoffdampfschalt- und -lüftungsventil (10) für eine Verbrennungskraftmaschine nach Anspruch 7,
**dadurch gekennzeichnet, dass**
die Ventilsitzplatte (99) in ihrem den Ventilsitz (92) bildenden Bereich eine geringere axiale Ausdehnung aufweist als der axiale Abstand der beiden Auflageflächen (84, 90) des Dichtelementes (86) zueinander.

9. Kraftstoffdampfschalt- und -lüftungsventil (10) für eine Verbrennungskraftmaschine nach Anspruch 7 oder 8,
**dadurch gekennzeichnet, dass**
die Ventilsitzplatte (99) über einen Befestigungsstift (101) an einem Regelkörper (100) befestigt ist, der ein zentrales Sackloch (103) aufweist, in welches sich der Befestigungsstift (101) des Ventilsitzkörpers (98) zur Befestigung des Regelkörpers (100) am Ventilsitzkörper (98) erstreckt.

10. Kraftstoffdampfschalt- und -lüftungsventil (10) für eine Verbrennungskraftmaschine nach Anspruch 9,
**dadurch gekennzeichnet, dass**
der Ventilsitzkörper (98) in einem Übergangsbereich (105) zwischen der Ventilsitzplatte (99) und dem Befestigungsstift (101) konkav geformt ist.

11. Kraftstoffdampfschalt- und -lüftungsventil (10) für eine Verbrennungskraftmaschine nach einem der vorherigen Ansprüche,
**dadurch gekennzeichnet, dass**
am Ventilkörper (62) eine Durchlassöffnung (96) ausgebildet ist, die radial innerhalb der zweiten Auflagefläche (90) mündet.

12. Kraftstoffdampfschalt- und -lüftungsventil (10) für eine Verbrennungskraftmaschine nach einem der Ansprüche 2 bis 11,
**dadurch gekennzeichnet, dass**
der Ventilkörper (62) über das Trägerelement (88) kardanisch an einer Ventilstange (64) befestigt ist, die mit dem Betätigungsglied (36) verbunden ist.

13. Kraftstoffdampfschalt- und -lüftungsventil (10) für eine Verbrennungskraftmaschine nach einem der Ansprüche 9 bis 12,
**dadurch gekennzeichnet, dass**
der Regelkörper (100) als Durchflussbegrenzungselement (94) dient, welches in eine Düse (104) bewegbar ist, die in einem Strömungsgehäuseteil (108) des zweiten Anschlusses (16) angeordnet ist, wobei die Feder (122) das Durchflussbegrenzungselement (94) in einer aus der Düse (104) heraus weisenden Richtung belastet.

## Claims

1. Fuel vapour switching and venting valve (10) for an internal combustion engine (26) with
an actuator (28),
a first port (12) and a second port (16),
a valve body (62) which is coupled to an axially movable actuating member (36) of the actuator (28) and comprises a first bearing surface (84) by means of which the valve body (62) can be lowered onto a first valve seat (82) and lifted off from the first valve seat (82), which is arranged between the first port (12) and the second port (16), and comprises a second bearing surface (90) with which the valve body (62) can be moved against a second valve seat (92) which is axially displaceable and is loaded in the direction of the valve body (62) via a spring (122),
**characterised in that**
the second bearing surface (90) is arranged radially within the first bearing surface (84) and is arranged axially closer to the actuator (28) than the first bearing surface (84).

2. Fuel vapour switching and venting valve (10) for an internal combustion engine according to claim 1,
**characterised in that**
the valve body (62) comprises a carrier element (88) to which a sealing element (86) is attached, on which the first bearing surface (84) and the second bearing surface (90) are configured.

3. Fuel vapour switching and venting valve (10) for an internal combustion engine according to claim 2,
**characterised in that**
the sealing element (86) is made of an elastomer, and the carrier element (88) is made of a thermoset, a thermoplastic or a metal.

4. Fuel vapour switching and venting valve (10) for an internal combustion engine according to claim 3,
**characterised in that**
the sealing element (86) is attached to the carrier element (88) by reshaping a radially outer collar (89) of the carrier element (88).

5. Fuel vapour switching and venting valve (10) for an internal combustion engine according to one of claims 2 to 4,
**characterised in that**
the two bearing surfaces (84, 90) of the sealing element (86) are configured as sealing lips (85, 93) which extend from the sealing element (86) at least axially in the direction of the respective valve seat (82, 92).

6. Fuel vapour switching and venting valve (10) for an internal combustion engine according to claim 5,
**characterised in that**
the sealing lips (85, 93) comprise an extension component in the axial direction and an extension component in the radially inward direction.

7. Fuel vapour switching and venting valve (10) for an internal combustion engine according to one of the preceding claims,
**characterised in that**
the second valve seat (92) is configured on a valve seat plate (99) of a valve seat body (98), which extends perpendicular to the centre axis.

8. Fuel vapour switching and venting valve (10) for an internal combustion engine according to claim 7,
**characterised in that**
the valve seat plate (99) comprises a smaller axial extension in its region forming the valve seat (92) than the axial distance between the two bearing surfaces (84, 90) of the sealing element (86).

9. Fuel vapour switching and venting valve (10) for an internal combustion engine according to claim 7 or 8,
**characterised in that**
the valve seat plate (99) is attached to a control body (100) via a fastening pin (101), which control body (100) comprises a central blind hole (103) into which the fastening pin (101) of the valve seat body (98) extends for attaching the control body (100) to the valve seat body (98).

10. Fuel vapour switching and venting valve (10) for an internal combustion engine according to claim 9,
**characterised in that**
the valve seat body (98) is concave in a transition region (105) between the valve seat plate (99) and the fastening pin (101).

11. Fuel vapour switching and venting valve (10) for an internal combustion engine according to one of the previous claims,
**characterised in that**
a passage opening (96) is configured on the valve body (62), which leads radially within the second bearing surface (90).

12. Fuel vapour switching and venting valve (10) for an internal combustion engine according to one of claims 2 to 11,
**characterised in that**
the valve body (62) is attached via the carrier element (88) to a valve rod (64) in a cardan-like manner, which is connected to the actuating member (36).

13. Fuel vapour switching and venting valve (10) for an internal combustion engine according to one of claims 9 to 12,
**characterised in that**
the control body (100) serves as a flow-limiting element (94) which is movable into a nozzle (104) arranged in a flow housing part (108) of the second port (16), wherein the spring (122) loads the flow-limiting element (94) in a direction pointing out of the nozzle (104).

## Revendications

1. Soupape de commutation et ventilation des vapeurs de carburant (10) pour un moteur à combustion interne (26) avec
un actionneur (28),
un premier port (12) et un deuxième port (16),
un corps de vanne (62) qui est couplé à un organe d'actionnement (36) déplaçable axialement de l'actionneur (28) et qui comprend une première surface d'appui (84) avec laquelle le corps de vanne (62) peut être abaissé sur un premier siège de vanne (82) et soulevé du premier siège de vanne (82), qui est disposé entre le premier port (12) et le deuxième port (16), et comprenant une deuxième surface d'appui (90) avec laquelle le corps de vanne (62) est déplaçable contre un deuxième siège de vanne (92) qui est déplaçable axialement et est sollicité par un ressort (122) en direction du corps de vanne (62),
**caractérisé en ce que**
la deuxième surface d'appui (90) est disposée radialement à l'intérieur de la première surface d'appui (84) et est disposée axialement plus près de l'actionneur (28) que la première surface d'appui (84).

2. Soupape de commutation et de ventilation des vapeurs de carburant (10) pour un moteur à combustion interne selon la revendication 1,
**caractérisé en ce que**
le corps de vanne (62) comprend un élément de support (88) sur lequel est fixé un élément d'étanchéité (86) sur lequel sont formées la première surface d'appui (84) et la deuxième surface d'appui (90).

3. Soupape de commutation et de ventilation des vapeurs de carburant (10) pour un moteur à combustion interne selon la revendication 2,
**caractérisé en ce que**
l'élément d'étanchéité (86) est fait d'un élastomère et l'élément de support (88) est fait d'une matière duroplastique, d'une matière thermoplastique ou d'un métal.

4. Soupape de commutation et de ventilation des vapeurs de carburant (10) pour un moteur à combustion interne selon la revendication 3,
**caractérisé en ce que**
l'élément d'étanchéité (86) est fixé à l'élément de support (88) par déformation d'un collier radialement extérieur (89) de l'élément de support (88).

5. Soupape de commutation et de ventilation des vapeurs de carburant (10) pour un moteur à combustion interne selon l'une quelconque des revendications 2 à 4,
**caractérisé en ce que**
les deux surfaces d'appui (84, 90) de l'élément d'étanchéité (86) sont réalisées sous forme de lèvres d'étanchéité (85, 93) qui s'étendent depuis l'élément d'étanchéité (86) au moins axialement en direction du siège de vanne (82, 92) correspondant.

6. Soupape de commutation et de ventilation des vapeurs de carburant (10) pour un moteur à combustion interne selon la revendication 5,
**caractérisé en ce que**
les lèvres d'étanchéité (85, 93) comprennent une composante d'extension dans la direction axiale et une composante d'extension vers l'intérieur dans la direction radiale.

7. Soupape de commutation et de ventilation des vapeurs de carburant (10) pour un moteur à combustion interne selon l'une des revendications précédentes,
**caractérisé en ce que**
le deuxième siège de vanne (92) est formé sur une plaque de siège de vanne (99) d'un corps de siège de vanne (98) s'étendant perpendiculairement à l'axe central.

8. Soupape de commutation et ventilation des vapeurs de carburant (10) pour un moteur à combustion interne selon la revendication 7,
**caractérisé en ce que**
la plaque de siège de soupape (99) comprend, dans sa zone formant le siège de soupape (92), une extension axiale inférieure à la distance axiale entre les deux surfaces d'appui (84, 90) de l'élément d'étanchéité (86).

9. Soupape de commutation et de ventilation des vapeurs de carburant (10) pour un moteur à combustion interne selon la revendication 7 ou 8,
**caractérisé en ce que**
la plaque de siège de soupape (99) est fixée par une tige de fixation (101) à un corps de régulation (100) qui comprend un trou borgne central (103) dans lequel s'étend la tige de fixation (101) du corps de siège de soupape (98) pour fixer le corps de régulation (100) au corps de siège de soupape (98).

10. Soupape de commutation et ventilation des vapeurs de carburant (10) pour un moteur à combustion interne selon la revendication 9,
**caractérisé en ce que**
le corps de siège de soupape (98) a une forme concave dans une zone de transition (105) entre la plaque de siège de soupape (99) et la tige de fixation (101).

11. Soupape de commutation et ventilation des vapeurs de carburant (10) pour un moteur à combustion interne selon l'une des revendications précédentes,
**caractérisé en ce que**
un orifice de passage (96) est formé sur le corps de vanne (62) et débouche radialement à l'intérieur de la deuxième surface d'appui (90).

12. Soupape de commutation et ventilation des vapeurs de carburant (10) pour un moteur à combustion interne selon l'une quelconque des revendications 2 à 11,
**caractérisé en ce que**
le corps de vanne (62) est fixé à la cardan, par l'intermédiaire de l'élément de support (88), à une tige de vanne (64) qui est reliée à l'organe d'actionnement (36).

13. Soupape de commutation et ventilation des vapeurs de carburant (10) pour un moteur à combustion interne selon l'une quelconque des revendications 9 à 12,
**caractérisé en ce que**
le corps de régulation (100) sert d'élément de limitation de débit (94) déplaçable dans une buse (104) disposée dans une partie de logement d'écoulement (108) du deuxième orifice (16), le ressort (122) sollicitant l'élément de limitation de débit (94) dans une direction orientée vers l'extérieur de la buse (104).
